# EUROPÄISCHE PATENTANMELDUNG

(11) **EP 0 599 056 A1**
(43) Veröffentlichungstag der Anmeldung: **01.06.1994**
(21) Anmeldenummer: 93116955.1
(22) Anmeldetag: 20.10.1993
(51) Int. Cl.: F16B 21/08, F16B 5/06

(54) **Beschlag**

(30) Priorität: 27.11.1992 DE 9216182 U
(71) Anmelder: HÄFELE GmbH & Co., D-72202 Nagold (DE)
(72) Erfinder: Althoff, Uwe, Dr., D-76307 Karlsbad (DE); Häsler, Georg, D-72202 Nagold (DE)
(74) Vertreter: KOHLER SCHMID + PARTNER

(57) **Zusammenfassung**

Die Erfindung bezieht sich auf einen Beschlag 1 zur lösbaren Verbindung zweier Platten 4, 5, insbesondere Möbelplatten, mit einem aus einer Freigabe in eine Sperrstellung schwenkbaren Spannteil 2, welches den Kopf 23 eines zugehörigen Anzugsbolzens 3 aufnimmt, wobei am Anzugsbolzenschaft 13 mindestens über ein Teil seiner Länge einen diesen hülsenartig umgebender Formteil 14 angebracht ist. Um zwischen dem Anzugsbolzen 3 und der die Bohrung 10 aufweisenden Platte 5 eine leicht herzustellende Verbindung ohne Schraubvorgang zu schaffen, weist dieser Formteil 14 an seiner dem Anzugsbolzenkopf 23 abgekehrten Seite mindestens zwei gegenüberstehende elastische Spreizbacken 15 od. dgl. auf, welche in eine in der einen Platte befindliche Bohrung od. dgl. einzuführen und in dieser zu verankern sind.

## Beschreibung

Die vorliegende Erfindung hat einen zur lösbaren Verbindung zweier Platten, insbesondere Möbelplatten, geeigneten Beschlag zum Gegenstand, der einen etwa zylinderförmigen, aus einer Freigabestellung in eine Sperrstellung schwenkbaren Spannteil aufweist, welcher in einer eine Einführöffnung aufweisenden Ausnehmung den Kopf eines zugehörigen Anzugsbolzens aufnimmt, wobei über einen Teil des Umfanges der Seitenwand des Spannteiles ein einseitig offener, den Durchtritt des Anzugsbolzenhalses ermöglichender Spannschlitz vorgesehen und an dem Anzugsbolzenschaft ein denselben hülsenartig umgebender, sich mindestens über eine Teillänge des Anzugsbolzenschaftes erstreckender Formteil angebracht ist.

Vor allem bei zur Selbstmontage bestimmten Platten ist es zweckmäßig, wenn sich bei der Lieferung die Anzugsbolzen bereits an einer der Platten befinden. Die Anordnung der Anzugsbolzen an der mit der Bohrung versehenen Platte ist praktisch ausgeschlossen, da die Anzugsbolzen senkrecht zur Plattenoberfläche stehen und daher eine Stapelung solcher Platten nicht möglich ist. Man muß infolge dessen die Anzugsbolzen mit ihrem Kopf im Spannteil vorsehen, wobei dieses soweit gedreht ist, daß der Anzugsbolzen festgehalten wird, ohne daß er bereits ganz in das Spannteil eingezogen ist. Bei den bekannten Ausführungsformen ist es dann jedoch zur Montage erforderlich, den Anzugsbolzen wieder herauszunehmen in die Bohrung der anderen Platte einzuschrauben und dann die Teile erst zusammenzusetzen. Diese Art der Montage ist jedoch umständlich und außerdem müssen die Platten jeweils solange gehalten werden, bis der Anzugsbolzen zumindest teilweise durch das Spannteil angezogen ist.

Aufgabe der vorliegenden Erfindung ist es nunmehr, zwischen dem Anzugsbolzen und der die Bohrung aufweisende Platte eine leicht herzustellende Verbindung ohne Schraubvorgang zu schaffen.

Erfindungsgemäß wird diese Aufgabe dadurch gelöst, daß der an dem Anzugsbolzen angeordnete Formteil an seiner dem Anzugsbolzenkopf abgekehrten Seite mindestens zwei einander gegenüberstehende elastische Spreizbacken od. dgl. aufweist, welche in eine in der zugehörigen Platte befindliche Bohrung einzuführen und in dieser zu verankern sind. Hierbei besteht der Formteil vorteilhaft aus Kunststoff und ist an dem Anzugsbolzen angespritzt. Dadurch wird es ermöglicht, die Platten mit seitlich abstehenden, im Spannteil gehaltenen Anzugsbolzen anzuliefern. Außerdem ist auch eine vorläufige Montage möglich, indem der Anzugsbolzen lediglich in die Bohrung der anderen Platte eingerastet und das Spannen des Anzugsbolzens erst später vorgenommen wird. Dadurch wird die Montage erheblich vereinfacht, da das Halten der Platten bis zum Spannvorgang entfällt.

Bei einer besonders zweckmäßigen Ausführungsform sind an dem freien Ende dieser Spreizbacken nach außen hin vorstehende Widerlager od. dgl. angeformt, welche in der Sperrstellung der Spreizbacken in der Bohrung od. dgl. der betreffenden Platte befindliche Gegenlager hintergreifen. Als Widerlager können hierbei winkelförmige, nach außen hin abstehende Haken, Ringbunde od. dgl. vorgesehen sein, die dann in ihrer Sperrstellung einen in der Bohrung od. dgl. befindliche ringförmige Bunde od. dgl. hintergreifen.

Um hierbei ein unerwünschtes Lösen der Widerlager oder Haken zu verhindern, ist es von Vorteil, wenn sowohl die dem Anzugsbolzenkopf zugekehrten Flächen der Haken oder Ringbunde als auch der Flächen des ringförmigen Bunde der in der zugeordneten Platte befindlichen Bohrung gegenüber der Längsachse des Anzugsbolzens geneigt sind und mit dieser Längsachse einen Winkel x einschließen, der kleiner als 90° ist.

Um darüberhinaus auch ein leichtes Einführen dieser an dem Kunststoffteil angeformten Haken oder Ringbunde zu ermöglichen, ist es noch zweckmäßig, wenn die dem Anzugsbolzenkopf abgekehrten Enden dieser Haken oder Ringbunde gegen die Längsachse des Anzugsbolzens geneigt sind und mit dieser Längsachse einen Winkel y einschließen der etwa gleich oder kleiner als 45° ist.

Auch kann in der Bohrung der Platte eine Hülse eingebracht sein, deren Innenmantel dann zur Bildung des ringförmigen Bundes eine Stufe aufweist.

Ein leichtes Lösen der ihrer Sperrstellung einnehmenden Spreizbacken läßt sich beispielsweise dadurch erreichen, daß sich die Schenkel dieser Spreizbacken bis in den aus der Bohrung der Platte herausragenden Bereich des Form- oder Kunststoffteiles erstrecken und aus einem ein Zusammendrücken dieser Spreizbacken in ihrer Freigabestellung ermöglichende elastischen Material bestehen.

Eine andere Möglichkeit besteht darin, daß in der in der Platte befindlichen Bohrung eingebrachten Hülse ein um deren Längsachse schwenkbarer, die Spreizbacken in eine Freigabestellung drückender Bauteil angeordnet ist.

In diesem Zusammenhang können in dem Innenmantel der in der Platte befindlichen Bohrung oder einer in diese eingebrachten Hülse auch eine der Anzahl der Spreizbacken entsprechende Anzahl Längsnuten eingearbeitet sein, deren Tiefe gleich der Breite des ringförmigen, als Gegenlager dienenden Bundes ist und die ähnlich wie bei einem Bajonettverschluß nach einem Verdrehen der Spreizbacken ein Herausziehen derselben auch in deren gespreizter Stellung aus der Bohrung oder der Hülse ermöglichen.

Eine besonders zweckmäßige, einem solchen Bajonettverschluß ähnliche Gestaltung zeichnet sich erfindungsgemäß dadurch aus, daß die in der Bohrung der Platte eingesetzte Hülse an ihrer der Hülsenöffnung abgekehrten Seite in zwei einander gegenüberstehende und sich jeweils über einen Bereich von etwa 90° erstreckende Anschlagbacken ausläuft.

Bei einer gleichartigen Ausführungsform kann an der Innenwandung dieser Hülse zusätzlich noch ein in das Hülseninnere vorstehendes mehrgängiges Gewinde angeformt sein, an deren Gewindegängen sich dann jeweils die Köpfe der Spreizbacken derart in axialer Richtung abstützen, daß der Anzugsbolzen bei einer Verdrehung eine axiale Verschiebung erfährt und so leicht aus der Hülse entfernt werden kann. Hierbei ist es dann zweckmäßig, wenn jedem der Spreizbackenköpfe dann ein eigener Gewindegang zugeordnet ist.

Weitere Einzelheiten der vorliegenden Erfindung ergeben sich aus der nachstehenden Beschreibung einer beispielsweisen Ausführungsform so den zugehörigen Ansprüchen 1 bis 9.

Es zeigen:
- Figur 1: einen Längsschnitt des zwei Holzplatten miteinander verbindenden Beschlages vor dem Einführen des einen Beschlagteiles in eine ihm zugeordnete, in der einen der beiden Platten befindliche Bohrung,
- Figur 2: einen der Figur 1 gleichartigen Längsschnitt mit dem in die Bohrung eingeführten Beschlagteil,
- Figur 3: eine andere, teilweise geschnittene Gestaltung des Beschlages,
- Figur 4: den teilweisen Längsschnitt der zu dem in der Figur 3 gezeigten Beschlag gehörenden Hülse mit der Ansicht in Richtung des Pfeiles A,
- Figur 5 bis 7: Querschnitte gemäß der Linie 5-5,
- Figur 8: ein Ansicht des Anzugsbolzens,
- Figur 9: einen Querschnitt einer Spreizbacke gemäß der Linie 9-9,
- Figur 10: den teilweisen Längsschnitt einer dritten Gestaltung des Beschlages und
- Figur 11: eine Vorderansicht der beiden Spreizbacken.

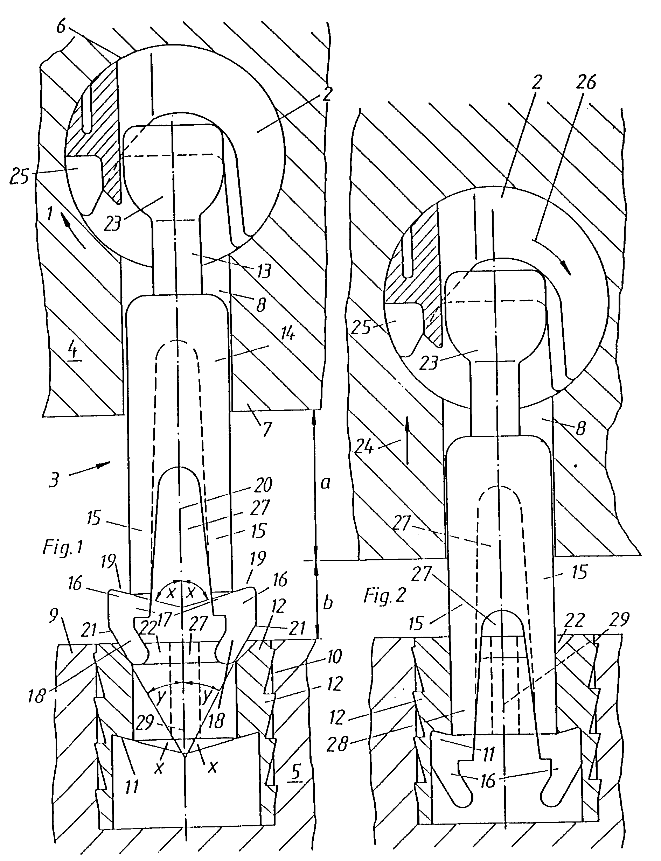

Der in beiden Figuren 1 und 2 im Längsschnitt dargestellte Beschlag 1 besteht aus einem zylindrischen Spannteil 2 und einen zu diesem gehörigen Anzugsbolzen 3 und dient der Verbindung von zwei aus Holz oder Kunststoff bestehenden Möbelplatten 4 und 5. Zur Aufnahme des zylindrischen Spannteiles 2 in der Möbelplatte 4 ist in dieser eine zylindrische Ausnehmung 6 eingearbeitet, die in eine von der Stirnseite 7 dieser Möbelplatte 4 eingebrachte Bohrung 8 übergeht. In der anderen Möbelplatte 5 ist von deren Stirnseite 9 aus ebenfalls eine mit 10 bezeichnete Bohrung eingearbeitet, in die eine gestufte und damit einen Ringbund 11 aufweisende Hülse 12 eingebracht ist.

An dem Schaft 13 des Anzugsbolzens 3 ist ein beispielsweise aus Kunststoff bestehender Formteil 14 anspritzt, der in zwei einander gegenüberstehenden Spreizbacken 15 ausläuft. Die freien Enden dieser beiden Spreizbacken 15 dienen dabei als Widerlager und weisen jeweils die Gestalt eines Hakens 16 auf. Diese Haken 16 sind als Winkelstücke ausgebildet, deren etwa horizontale Schenkel 17 in radialer Richtung über den Formteil 14 hinausragen und deren vertikale Schenkel 18 schräg nach innen geneigt sind. Die Oberflächen 19 der Schenkel 17 schließen dabei mit der Längsachse 20 des Anzugsbolzens 3 einen Winkel x ein, der kleiner als 90° ist. Die Außenflächen 21 der Schenkel 18 dagegen schließen mit dieser Längsachse 20 des Anzugsbolzens 3 einen Winkel y ein, der etwa gleich oder kleiner als 45° ist.

Die in die Bohrung 10 der Möbelplatte 5 eingebrachten Hülse 12 besteht aus Metall oder auch aus Kunststoff, wobei deren Ringbund 11 ein Gegenlager für die Haken 16 der beiden Spreizbacken 15 bildet. Die Ringfläche dieses Ringbundes 11 schließt dabei mit der Längsachse 20 des Anzugsbolzens 3 wiederum den gleichen Winkel x wie auch die Oberflächen 19 der horizontalen Schenkel 17 der Sperrbacken 15 ein.

Soll dieser aus den beiden Bauteilen 2 und 3 bestehende Beschlag 1 montiert werden, so werdem die Haken 16 der Spreizbacken 15 des Formteiles 14 auf die sich konisch erweiternde Öffnung 22 der Hülse 12 aufgesetzt und durch den axialen Druck auf den Kopf 23 zwangsläufig soweit zusammengedrückt, daß sie in die Hülse 12 eingeführt werden können. Sobald der Anzugsbolzen 3 um das Maß a in die Hülse 12 eingeführt worden ist, nehmen die Spreizbacken 15 ihre in der Figur 2 gezeigte Spreizstellung ein, wobei die Haken 16 dann den als Gegenlager dienenden Ringbund 11 hintergreifen. Ist diese Kupplung der Spreizbacken 15 mit der Hülse 12 erfolgt, so wird anschließend der Anzugsbolzen 3 zusammen mit seinem Kopf 23 soweit in Richtung des Pfeiles 24 in die in der anderen Möbelplatte 4 befindliche Bohrung 8 eingeführt, bis der Anzugsbolzenkopf 23 mit den beiden Greifarmen 25 des Spannteiles 2 in Eingriff kommt. Wird sodann dieser Spannteil 2 entgegen dem Uhrzeigersinn in Richtung des Pfeiles 26 verdreht, so wird der Anzugsbolzen 3 um das Maß b soweit in die Bohrung 8 hineingezogen, bis die beiden Möbelplatten 4 und 5 mit ihren beiden Stirnseiten 7 und 9 fest und unter hoher Spannung aneinander anliegen.

Nach einem weiteren Merkmal der Erfindung weist das Formteil 14 in axialem Abstand mehrere, im vorliegenden Ausführungsbeispiel drei ringförmige Rippen 42 auf. Der Außenumfang dieser Rippen ist dabei größer als die Bohrung 8 in der Möbelplatte 4, so daß der Bolzen dadurch bereits einen ausreichenden vorläufigen Halt in der Möbelplatte 4 findet und man dadurch auf das Verdrehen des Spannteiles 2 verzichten kann. Um ein ungewolltes Verdrehen des Ayzugsbolzens 3 der Bohrung 8 zu verhindern, können außerdem noch in der Zeichnung nicht dargestellte Längsrippen am Formteil 14 vorgesehen sein.

Um gegebenenfalls ein Lösen dieser Verbindung herbeizuführen, ist es notwendig, die beiden Spreizbacken 15 aus ihrer in der Figur 2 gezeigten Sperrstellung soweit in eine Freigabestellung zu drücken, daß die Spreizbacken 15 wieder aus der Hülse 12 herausgezogen werden können. Hierzu bieten sich die beiden folgenden Möglichkeiten an:

Einerseits kann die zwischen den beiden Spreizbacken 15 befindliche schlitzartige Öffnung 27 in der in den Figuren 1 und 2 gestrichelten Weise so weit hochgezogen werden, daß auch in der in Figur 2 dargestellten Sperrstellung der Spreizbacken 15 diese mittels eines geeigneten Werkzeuges soweit gegeneinander gedrückt werden können, daß die Haken 16 ihre Freigabestellung einnehmen und der Anzugsbolzen 3 somit aus der Hülse 12 herausgezogen werden kann.

Eine andere Möglichkeit besteht darin, daß beispielsweise um 90° zu den Spreizbacken 15 versetzt in dem Innenmantel 28 der Hülse 12 zwei einander gegenüberstehende , gestrichelt dargestellte Längsnuten 29 eingeformt sind. Diese Längsnuten 29 bilden zusammen mit der Hülse 12 einen bajonettartigen Verschluß und ermöglichen bei einem Verdrehen des Anzugsbolzens 3 um 90° somit ein Herausziehen der beiden Spreizbacken 15 auch in deren Sperrstellung.

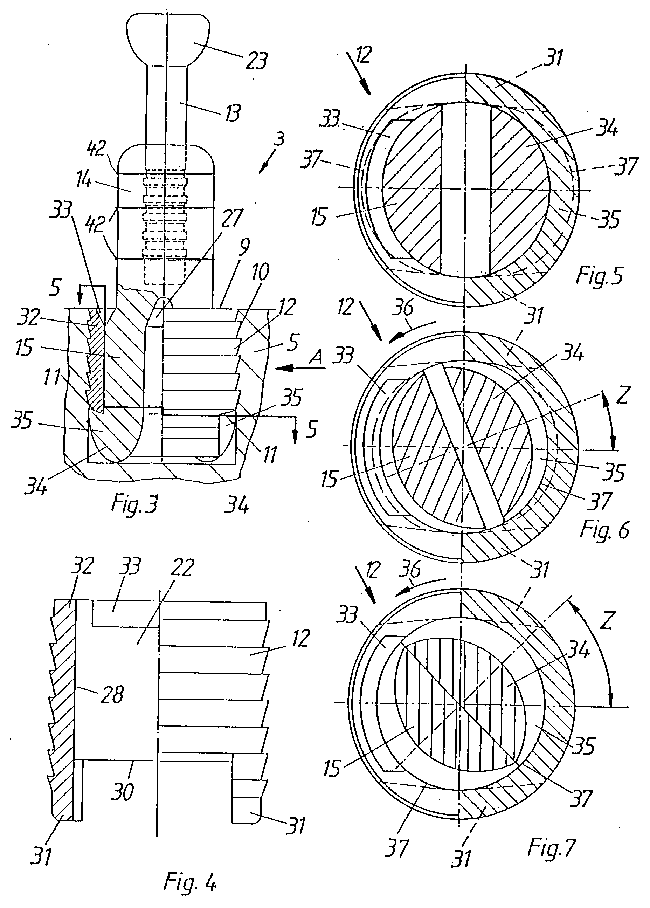

Die folgenden Figuren 3 bis 7 zeigen eine weitere, ähnlich einem Bajonettverschluß gestaltete Ausführungsform, bei der wieder die gleichen Bauteile durch die gleichen Bezugszeichen gekennzeichnet sind. In diesem Fall weist die in die Bohrung 10 der Möbelplatte 5 eingebrachte Hülse 12 an ihrer der Hülsenöffnung 22 abgekehrten Stirnseite 30 zwei einander gegenüberstehende Anschlagbacken 31 auf, die nach unten über diese untere Stirnseite 30 vorstehen. Außerdem sind in dem die Hülsenöffnung 22 umgebenden Hülsenrand 32 zu den beiden Anschlagbacken 31 jeweils um 180° versetzt zwei das Einführen der beiden Spreizbacken 15 in die Hülse 12 erleichternde Senkungen 33 eingearbeitet.

Diese Senkungen 33 gewährleisten gleichzeitig auch, daß die Spreizbacken 15 in der in der Figur 5 gezeigten Stellung in die Hülse 12 eingeführt werden. Hierbei werden die elastischen Spreizbacken 15 zusammengedrückt und stützen sich über ihre den zuvor schon erwähnten Haken 16 entsprechenden, an den Spreizbackenköpfen 34 angeformten und nach außen vorstehenden Ringbunden 35 an dem Innenmantel 28 der Hülse 12 ab. Sobald diese Ringbunde 35 die untere Stirnseite 30 der Hülse 12 passiert haben, nehmen die Spreizbacken 15 wieder ihre Spreizstellung ein, in der deren Ringbunde 35 nun die beiden einander gegenüberstehenden Ringbunde 11 der Hülse 12 hintergreifen und so den Anzugsbolzen 3 gegen ein Herausrutschen aus der Hülse 12 sichern.

Soll dieser Anzugsbolzen 3 nun wieder aus der Hülse 12 herausgezogen werden, so ist er in der in den Figuren 6 und 7 gezeigten Weise entgegen dem Uhrzeigersinn in Richtung des Pfeiles 36 zu verdrehen. Bereits nach einer nur geringen Verdrehung stoßen die Ringbunde 35 mit ihren Außenkanten 37 gegen die Anschlagbolzen 31 an, was wieder ein Zusammendrücken der Spreizbacken 15 zur Folge hat. Bereits nach einer Verdrehung des Anzugsbolzens 3 um den Winkel Z von nur 45° sind die Spreizbacken 15 vollständig zusammengedrückt, so daß deren Ringbunde 35 ihre Freigabestellung einnehmen und der Anzugsbolzen 3 nunmehr aus der Hülse 12 herausgezogen werden kann.

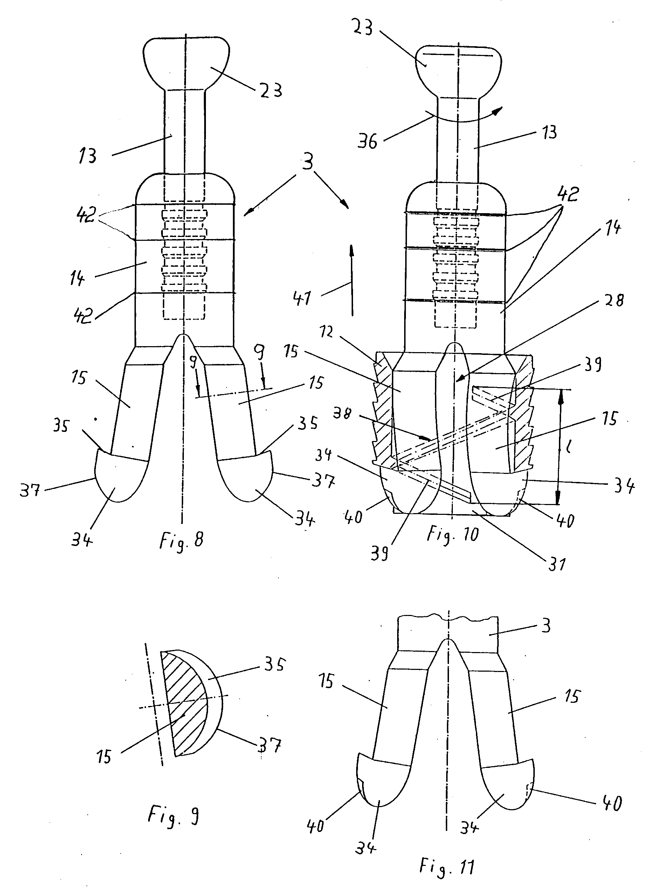

Die Figuren 10 und 11 schließlich zeigen eine Weiterbildung der zuvor behandelten, in den Figur 3 bis 7 gezeigten Gestaltung. In diesem Fall ist an dem Innenmantel 28 der die gleichen Anschlagbacken 31 aufweisenden Hülse 12 zusätzlich noch ein Gewinde 38 mit zwei den beiden Spreizbackenköpfen 34 zugeordneten Gewindegängen 39 angeformt, die sich jeweils über nur etwa eine Windung erstrecken. Die beiden Spreizbacken 15 stützen sich dabei über ihre Köpfe 34 und den in diesen eingearbeiteten Auflaufflächen 40 auf jeweils einem Gewindegang 39 ab, von denen in der Figur 10 nur der eine, dem rechts dargestellten Spreizbackenkopf 34 zugeordnete Gewindegang 39 sichtbar ist.

Soll nun der in der Figur 10 dargestellte Anzugsbolzen 3 in Richtung des Pfeiles 41 an der Hülse 12 herausgezogen werden, so ist auch dieser Bolzen 3 entgegen dem Uhrzeigersinn 36 zu verdrehen, so daß die beiden Spreizbackenköpfe 34 mit ihren Ringbunden 35 an den Anschlagbacken 31 auflaufen und die Spreizbacken 15 in der in der Figur 7 gezeigten Weise in ihre Freigabestellung zusammengedrückt werden. Gleichzeitig aber kommen die beiden Spreizbackenköpfe 34 über ihre Auflaufflächen 40 mit dem jeweils zugeordneten Gewindegang 39 in Eingriff, so daß bei einem weiteren Verdrehen des Anzugsbolzens 3 die Spreizbackenköpfe 34 und mit diesen der ganze Anzugsbolzen 3 eine axiale Verschiebung in Richtung des Pfeiles 41 erfahren. Im vorliegenden Fall weisen die beiden Gewindegänge 39 jeweils nur eine Windung auf, die sich über eine etwa der Hülsenlänge gleiche Länge 1 erstreckt.

Die Hülse 12 kann in nicht dargestellter Weise auch am Ringbund abschließen, wobei lediglich die Bohrung 10 der Möbelplatte 5 so tief gehalten sein muß, daß beim Untergreifen der Ringfläche des Ringbundes 11 durch die Haken 16 noch genügend Platz für diese in axialer Richtung vorhanden ist.

## Patentansprüche

1. Beschlag zur lösbaren Verbindung zweier Platten, insbesondere Möbelplatten, mit einem aus einer Freigabe- in eine Sperrstellung schwenkbaren Spannteil, welches den Kopf eines zugehörigen Anzugsbolzens aufnimmt, wobei am Anzugsbolzenschaft mindestens über ein Teils einer Länge ein diesen hülsenartig umgebender Formteil angebracht ist, dadurch gekennzeichnet, daß dieser Formteil (14) an seiner dem Anzugsbolzenkopf (23) abgekehrten Seite mindestens zwei gegenüberstehende elastische Spreizbacken (15) od. dgl. aufweist, welche in eine in der einen Platte befindlichen Bohrung od. dgl. einzuführen und in dieser zu verankern sind.

2. Beschlag nach Anspruch 1, dadurch gekennzeichnet, daß an den freien Enden der Spreizbacken (15) nach außen hin vorstehende Widerlager (16, 35) od. dgl. angeformt sind, die in der Sperrstellung der Spreizbacken (15) in der Bohrung (10) od. dgl. der Platte (5) befindliche Gegenlager (11) hintergreifen.

3. Beschlag nach Anspruch 2, dadurch gekennzeichnet, daß die Widerlager als winkelförmige, nach außen hin abstehende Haken (16), Ringbunde (35) od. dgl. ausgebildet sind, die in ihrer Sperrstellung in der Bohrung (10) od. dgl. befindliche ringförmige Bunde (11) hintergreifen.

4. Beschlag nach Anspruch 3, dadurch gekennzeichnet, daß sowohl die dem Anzugsbolzenkopf (23) zugekehrten Flächen (19) der Haken (16) oder Ringbunde (35) als auch die Fläche des ringförmigen Bundes (11) gegenüber der Längsachse (20) des Anzugsbolzens (3) geneigt sind und mit dessen Längsachse (20) einen Winkel (x) einschließen, der kleiner als 90° ist.

5. Beschlag nach einem oder mehreren der Ansprüche 2 bis 4, dadurch gekennzeichnet, daß die dem Anzugsbolzenkopf (23) abgekehrten Enden der Haken (16) oder Ringbunde (35) gegen die Längsachse (20) des Anzugsbolzens (3) geneigt sind und mit dieser Längsachse (20) einen Winkel (y) einschließen, der etwa gleich oder kleiner als 45° ist.

6. Beschlag nach einem oder mehreren der Ansprüche 1 bis 4, dadurch gekennzeichnet, daß in der Bohrung (10) der Platte (5) eine Hülse (12) eingebracht ist, deren Innenmantel (28) zur Bildung des ringförmigen Bundes (11) eine Stufe aufweist.

7. Beschlag nach einem oder mehreren der Ansprüche 1 bis 6 dadurch gekennzeichnet, daß sich die Schenkel der Spreizbacken (15) bis in den aus der Bohrung (10) der Platte (5) herausragenden Bereich des Formteiles (14) erstrecken und aus einem ein Zusammendrücken der Spreizbacken (15) in eine Freigabestellung ermöglichenden elastischen Material bestehen.

8. Beschlag nach einem oder mehreren der Ansprüche 1 bis 6, dadurch gekennzeichnet, daß in der in der Platte (5) befindlichen Bohrung (10) eingebrachten Hülse (12) ein um deren Längsachse (20) schwenkbarer, die Spreizbacken (15) in eine Freigabestellung bringender Bauteil angeordnet ist.

9. Beschlag nach einem oder mehreren der Ansprüche 1 bis 6, dadurch gekennzeichnet, daß sich in dem Innenmantel (28) der in der Platte (5) befindlichen Bohrung (10) oder einer in diese eingebrachten Hülse (12) eine der Anzahl der Spreizbacken (15) entsprechende Anzahl Längsnuten (29) befinden, deren Tiefe gleich der Breite des ringförmigen, als Gegenlager dienenden Bundes (11) ist und die ähnlich wie bei einem Bajonettverschluß ein Herausziehen der Spreizbacken (15) auch in deren gespreizter Sperrstellung aus der Bohrung (10) oder der Hülse (12) ermöglichen.

10. Beschlag nach einem oder mehreren der Ansprüche 1 bis 6, dadurch gekennzeichnet, daß die in der Bohrung (10) der Platte (5) eingebrachte Hülse (12) an ihrer der Hülsenöffnung (27) abgekehrten Seite in zwei einander gegenüberstehende, sich jeweils über einen Bereich von etwa 90° erstreckende und zusammen mit den Spreizbacken (15) eine Bajonettverschluß bildende Anschlagbacken (31) ausläuft.

11. Beschlag nach Anspruch 10, dadurch gekennzeichnet, daß in dem äußeren Rand (32) der Hülse(12) zu den beiden Anschlagbacken (31) jeweils um 90° versetzt zwei einander gegenüberstehende, das Einführen der Spreizbacken (15) erleichternde, in die Innenwandung (28) der Hülse (12) übergehende Senkungen (33) eingearbeitet sind.

12. Beschlag nach den Ansprüchen 10 und 11, dadurch gekennzeichnet, daß an der Innenwandung (28) der Hülse (12) ein in das Hülseninnere vorstehendes mehrgängiges Gewinde (38) angeformt ist, dessen Anzahl der Gänge (39) der Anzahl der an den Spreizbacken (15) befindlichen Spreizbackenköpfe (34) gleich ist, wobei sich die Spreizbacken (15) über ihre Köpfe (34) jeweils an einem dieser Gewindegänge (39) abstützen.

13. Beschlag nach Anspruch 12, dadurch gekennzeichnet, daß die Spreizbackenköpfe (34) jeweils eine mit dem zugehörigen Gewindegang (39) zusammenwirkende Auflauffläche (40) aufweisen.

14. Beschlag nach den Ansprüchen 12 und/oder 13, dadurch gekennzeichnet, daß jeder Gewindegang (39) nur eine Windung aufweist.

15. Beschlag nach einem oder mehreren der vorhergehenden Ansprüche, dadurch gekennzeichnet, daß das Formteil (14) in axialem Abstand voneinander mehrere ringförmige Rippen (42) aufweist.

16. Beschlag nach einem oder mehreren der vorhergehenden Ansprüche, dadurch gekennzeichnet, daß das Formteil (14) ein oder mehrere Längsrippen aufweist.
